# EUROPÄISCHE PATENTSCHRIFT

(11) **EP 1 086 852 B1**
(45) Veröffentlichungstag und Bekanntmachung des Hinweises auf die Patenterteilung: **28.01.2004**
(21) Anmeldenummer: 00120130.0
(22) Anmeldetag: 20.09.2000
(51) Int. Cl.: B60N 2/56

(54) **Sitzpolster für Fahrzeugsitze**
Seat cushion for vehicle seats
Coussin pour siège d'automobile

(30) Priorität: 11.02.2000 DE 20002447 U; 21.09.1999 DE 29916636 U
(43) Veröffentlichungstag der Anmeldung: 28.03.2001
(73) Patentinhaber: Johnson Controls GmbH, 51399 Burscheid (DE)
(72) Erfinder: Schmale, Gerhard, 42499 Hückeswagen (DE)
(74) Vertreter: Wolff, Felix, Dr.

(56) Entgegenhaltungen:
- EP-A- 0 345 806
- DE-A- 4 001 207
- FR-A- 2 686 299
- US-A- 5 544 942
- US-A- 5 626 386
- US-A- 5 927 817

## Beschreibung

Die vorliegende Erfindung betrifft ein Sitzpolster, insbesondere für Fahrzeugsitze, mit mindestens einem Kernteil aus einem elastischen Kunststoffschaum.

Derartige Sitzpolster werden heute vielfach für Fahrzeugsitze verwendet. Als Kernteil wird ein aus Polyurethanschaum (PUR-Kaltschaum) hergestelltes Formteil eingesetzt.

Für Sitzpolster von höherwertigen Fahrzeugen werden auch Formteile aus einem Gemisch von Naturfasern, wie Kokosfasern, Tierhaaren und dergleichen, verwendet, wobei die Fasern mit Bindemitteln, insbesondere Latex, versehen und zu einem Polsterteil geformt werden. Ein solches Faser-Bindemittel-Material ist auch unter dem Begriff "Gummihaar" bekannt.

Beide bekannte Arten von Sitzpolstern weisen Vorteile und Nachteile auf. Während das Formteil aus Schaumstoff leicht, aber wenig luftdurchlässig ist, weisen Polsterteile aus Gummihaar ein wesentlich höheres Gewicht auf, lassen sich aber aufgrund einer hohen Luftdurchlässigkeit sehr gut klimatisieren.

Bei Sitzpolstern ist es zudem erwünscht, bestimmte Zonen der Sitzfläche derart unterschiedlich auszubilden, dass unterschiedliche Sitzdrücke abgestützt werden können. So ist im Bereich der menschlichen Sitzbeinhöcker ein höherer Sitzdruck abzustützen, als beispielsweise im Bereich der Oberschenkel. Allerdings würde sich eine Abstützung auf einer zu kleinen Fläche wiederum negativ auf das Wohlbefinden des Sitzbenutzers auswirken, da ein hoher Sitzdruck ggf. die Durchblutung der Beine störend beeinflussen kann. Eine schlechte Sitzdruckverteilung kann nicht selten zu "eingeschlafenen Beinen" führen. Um diesen Problemen entgegenzuwirken, sind auch bereits Polsterteile aus sogenanntem Zweizonenschaum bekannt. Bei diesen Polsterteilen wird in den entprechenden Teilbereichen härterer bzw. weicherer Schaum verwendet. Die Herstellung solcher Polsterteile ist jedoch schwierig und kostenintensiv, und oftmals wird gar nicht der erwünschte Effekt erreicht, da eine Feinabstimmung der Sitzdruckverteilung nur sehr schlecht möglich ist.

Die EP-A-0 345 806 (Figuren 64 bis 68) beispielsweise beschreibt ein Sitzpolster eines Automobilsitzes, bei dem mehrere konzentrisch umeinander angeordnete Vertiefungen in der Sitzfläche angeordnet sind. Die Vertiefungen sind jedoch derart angeordnet, dass die Luft von einer sitzenden Person eingeschlossen wird, so dass eine Luftzirkulation weitgehend unterbunden ist.

Der vorliegenden Erfindung liegt daher die Aufgabe zugrunde, ein Polsterteil der eingangs beschriebenen, gattungsgemäßen Art zu schaffen, dessen Sitzfläche auf einfache und preiswerte Weise sowie sehr genau auf den gewünschten Sitzkomfort abstimmbar ist und das eine verbesserte Luftzirkulation in der Sitzfläche ermöglicht.

Erfindungsgemäß wird dies durch ein Sitzpolster mit den Merkmalen des Patentanspruchs 1 gelöst. Vorteilhafte Ausgestaltungen der Erfindung befinden sich in den abhängigen Ansprüche 2 - 9.

Die die Sitzfläche durchziehenden Vertiefungen bewirken zonale Schwächungen, so dass durch einen bestimmten Verlauf der Vertiefungen die dazwischenliegenden, verbleibenden Teilflächen des Kernteils eine unterschiedliche Abstützwirkung haben können. Dies bedeutet, dass Teilflächen mit unterschiedlicher Flächengröße geschaffen werden können. Hierbei ergeben nahe beieinander liegende kleinere Teilflächen einen relativ weichen Teilbereich, während größere Teilflächen einen insgesamt härteren Bereich erzeugen. Dadurch läßt sich auf einfache Weise die gesamte Sitzfläche entsprechend der erforderlichen Druckverhältnisse gestalten. Dies führt zu einer guten, körpergerechten Unterstützung, die aber gleichzeitig ein weiches, angenehmes Sitzempfinden ergibt. Dabei sind die kanalartigen Vertiefungen und die dadurch gebildeten, verbleibenden Teilflächen des Kernteils geometrisch in Anpassung an die menschliche Anatomie im Sitz-Anlagebereich derart ausgelegt, dass eine optimale Sitzdruck-Verteilung erreicht wird.

Durch die Erfindung ist grundsätzlich sogar eine individuelle Abstimmung jedes Sitzes auf die Sitzbedürfnisse des jeweiligen Benutzers möglich, indem die kanalartigen Vertiefungen einen vorzugsweise empirisch ermittelten, für alle Benutzer gleichartigen Verlauf aufweisen, wobei dann aber die Vertiefungen zumindest teilweise mit Einlagen ausgefüllt werden können. Diese Einlagen bestehen vorzugsweise aus einem im Vergleich zu dem Kernteil härteren Material.

Die Einlagen geben den Sitzdruck jeweils in das angrenzende Polstermaterial weiter.

Um einen möglichst sanften Übergang der Druckverteilung von relativ härteren Zonen in relativ weichere Zonen zu schaffen, ist es vorteilhaft, die mit den Vertiefungen durchzogene, dem Sitzbenutzer zugewandte Fläche des Kernteils mit einer verhältnismäßig dünnen Auflage zu überdecken. Vorzugsweise besteht diese Auflage aus dem oben beschriebenen "Gummihaar".

Vorteilhafterweise wird durch die Erfindung auch eine wesentliche Klimaverbesserung erreicht, indem die kanalartigen Vertiefungen zumindest teilweise eine Luftzirkulation ermöglichen. Insbesondere in Kombination mit der Gummihaar-Auflage hat sich gezeigt, dass aufgrund der stark luftdurchlässigen Auflage ein ausgezeichneter Abtransport der Luftfeuchtigkeit erreicht wird. Durch eine ständige Bewegung des Sitzbenutzers auf dem Sitzpolster während einer Fahrt entsteht in dem kanalartigen System der Vertiefungen des Kernteils eine durch eine Art Pumpwirkung erzeugte Luftströmung, die die feuchte Luft - insbesondere durch dafür vorgesehene, vertikale Öffnungen im Schaumpolsterteil - nach außen transportiert, und zwar vorteilhafterweise, ohne dass zusätzliche Ventilatoren eingesetzt werden müßten.

Allerdings ist erfindungsgemäß auch eine zusätzliche Aktivbelüftung durch mindestens einen Ventilator möglich. Der Lüfter sollte dann vorzugsweise unterhalb des Sitzpolsters mit vertikaler Luftströmung angeordnet sein, wobei eine Saug- oder Druckwirkung möglich ist.

Weitere vorteilhafte Ausgestaltungsmerkmale sind in den Unteransprüchen sowie der folgenden Beschreibung enthalten.

Anhand von in der Zeichnung veranschaulichten Ausführungsbeispielen soll die Erfindung genauer erläutert werden. Dabei zeigen:
- Fig. 1: eine teilgeschnittene Perspektivansicht einer ersten Ausführung eines erfindungsgemäßen Sitzpolsters,
- Fig. 2: eine Ansicht ähnlich Fig.1 einer zweiten, bevorzugten Ausführung des Sitzpolsters,
- Fig. 3: einen Längsschnitt etwa in der Schnittebene III-III gemäß Fig. 2,
- Fig. 4: einen schematischen Querschnitt IV-IV gemäß Fig. 2 und
- Fig. 5: einen Längsschnitt des Sitzpolsters in einer vorteilhaften Ausgestaltung.

Das veranschaulichte Sitzpolster 1 ist insbesondere als unteres Sitzteil eines Fahrzeugsitzes gedacht, kann aber ggf. auch für eine Fahrzeugsitz-Rückenlehne verwendet werden. Das Sitzpolster 1 weist eine obere Sitzfläche 2 auf, die in einer sitzergonomischen Weise reliefiert sein kann. Innerhalb des Sitzpolsters 1 ist ein Kernteil 4 aus einem elastischen Kunststoffschaum angeordnet.

Erfindungsgemäß weist das Kernteil 4 auf seiner oberen, der Sitzfläche 2 zugekehrten Seite kanalartige Vertiefungen 6 auf. Zwischen den Vertiefungen 6 verbleiben Teilflächen 8a, 8b, 8c, 8d, die durch einen entsprechenden Verlauf der Vertiefungen 6 erfindungsgemäß derart in Anpassung an die menschliche Anatomie im Sitz-Auflagebereich ausgelegt sind, dass eine optimale Sitzdruck-Verteilung erreicht wird.

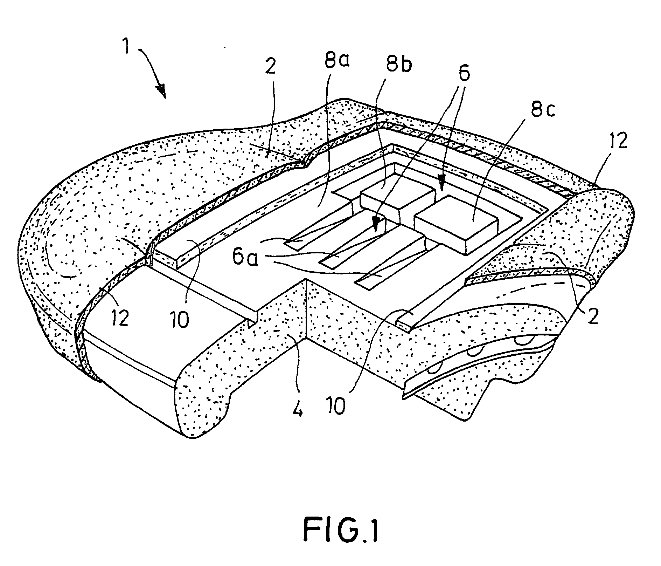

In den dargestellten Ausführungsbeispielen sind zwei jeweils vollständig von kanalartigen Vertiefungen 6 umschlossene Teilflächen 8b und 8c als Stützelemente zur Abstützung der menschlichen Sitzbeinhöcker vorgesehen. Dementsprechend sind die beiden Teilflächen 8b und 8c in Fahrtrichtung gesehen nebeneinander angeordnet. Die Vertiefungen 6 haben in diesem Sitzbereich im Wesentlichen den Verlauf einer Ziffer "8", z. B. gemäß Fig. 1 entsprechend einer rechteckigen "8" einer Digitalanzeige (sog. Siebensegmentanzeige). Dadurch werden die Teilflächen 8b, 8c jeweils ganz von den kanalartigen Vertiefungen 6 umschlossen.

In einer nicht dargestellten Ausführung können die kanalartigen Vertiefungen 6 zumindest teilweise mit Einlagen ausgefüllt sein. Diese streifenförmigen Einlagen bestehen dann vorzugsweise aus einem im Vergleich zu dem Kernteil 4 härteren Material (Schaum).

Vorteilhafterweise ermöglichen die kanalartigen Vertiefungen 6 auch zumindest teilweise eine gute Luftzirkulation innerhalb des Sitzpolsters 1. Bei dem in Fig. 1 dargestellten Beispiel sind vorzugsweise Kanalabschnitte 6a vorgesehen, die ausgehend vom Bereich der Sitzbeinhöcker, d. h. von den diesen Bereich umschließenden Vertiefungen 6, mit insbesondere abnehmender Tiefe in Richtung des Sitzrandes, insbesondere des vorderen Sitzrandes, verlaufen. Dabei sind im Bereich der Vertiefungen 6 und/oder 6a vertikale Durchgangsöffnungen gebildet (in der Zeichnung nicht erkennbar).

Es ist zudem vorteilhaft, wenn das Schaum-Kernteil 4 zumindest in einem die Vertiefungen 6 überdeckenden Bereich mit einer - in Fig. 1 teilweise weggeschnittenen - Auflage 10 abgedeckt ist. Vorzugsweise besteht diese Auflage 10 aus einem groben, luftdurchlässigen Faser-Bindemittel-Material (Gummihaar).

Das Kernteil 4 selbst besteht bevorzugt aus PUR-Kaitschaum.

Das gesamte Sitzpolster 1 ist mit einem geeigneten Überzugmaterial 12 überdeckt.

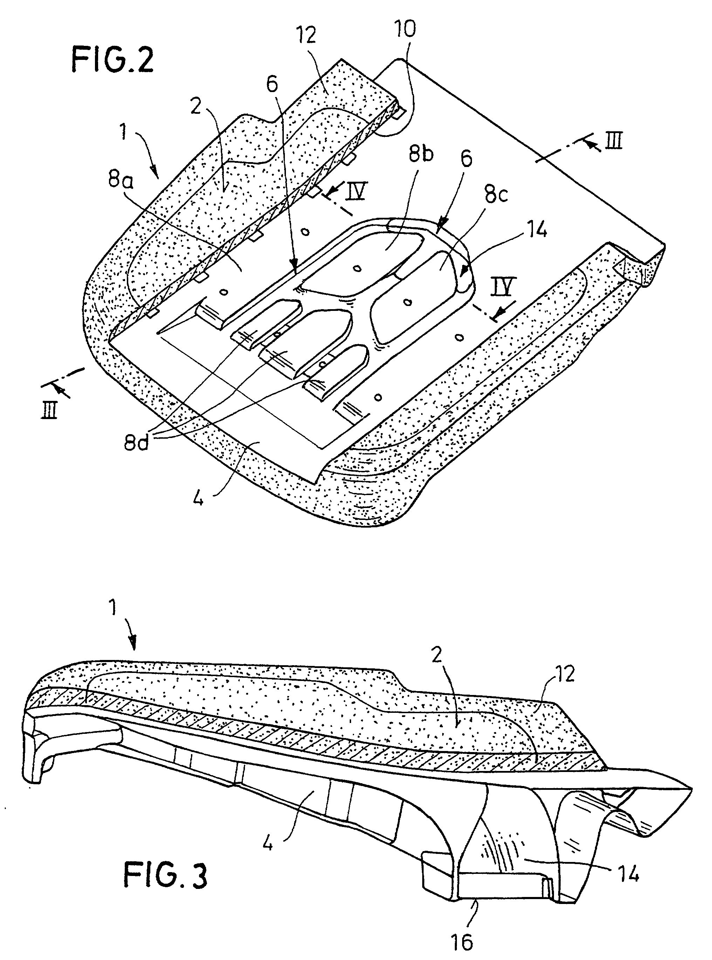

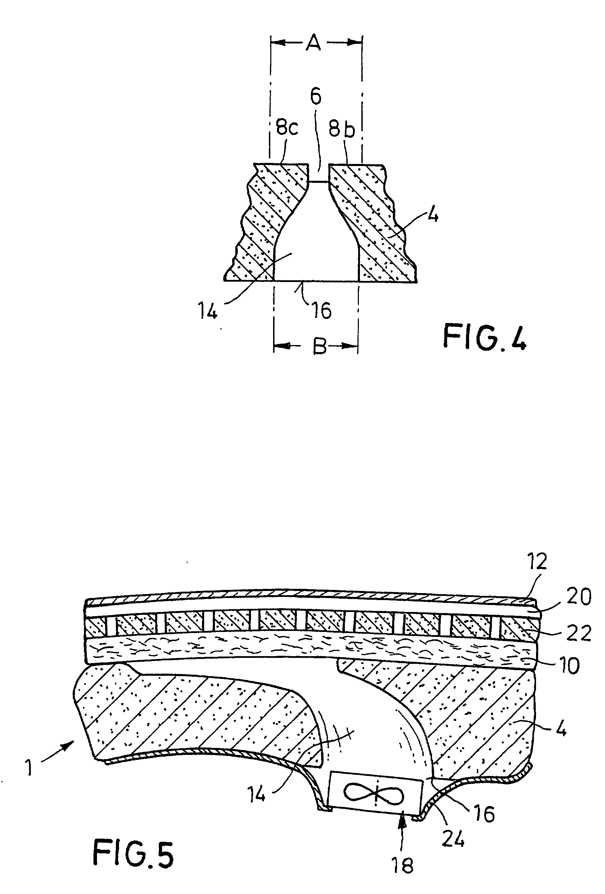

Eine weitere, bevorzugte Ausführungsform des erfindungsgemäßen Sitzpolsters 1 ist in den Fig. 2 bis 4 veranschaulicht. Dabei sind zunächst gleiche Teile bzw. Komponenten mit den gleichen Bezugsziffern wie in Fig. 1 bezeichnet. Dieses Sitzteil ist als Klimasitz ausgeführt, wozu sich ein Hauptkanal 14 ausgehend von der der Sitzfläche 2 gegenüberliegenden Unterseite durch das Kernteil 4 erstreckt und nach oben hin in die kanalartigen Vertiefungen 6 übergeht. Im Bereich einer unteren Mündungsöffnung 16 des Hauptkanals 14 kann ein Lüfter 18 (vgl. Fig. 5) so angeordnet werden, daß eine Luftströmung durch das Sitzpolster 1 hindurch erzeugt werden kann. Dabei ist die Strömungsrichtung grundsätzlich beliebig, bevorzugt aber von unten nach oben.

Der Hauptkanal 14 weist im Bereich seiner unteren Mündungsöffnung 16 einen an einen Strömungsquerschnitt des jeweiligen Lüfters 18 angepassten, insbesondere kreisförmigen Kanalquerschnitt auf, der stetig und mit vorzugsweise etwa gleichbleibender Gesamtquerschnittsflächengröße über einen länglichen, schlitzartigen Übergangsquerschnitt in die Vertiefungen 6 auf der Oberseite des Kernteils 4 übergeht. Aufgrund der im Wesentlichen über den Kanalverlauf hinweg gleichbleibenden Querschnittsflächengröße wird eine gleichmäßige Luftdurchströmung erreicht. Wie sich aus Fig. 3 und 4 ergibt, ist die untere Mündungsöffnung 16 des Hauptkanals 14 etwa im Bereich unterhalb der als Stützelemente für die menschlichen Sitzbeinhöcker vorgesehenen Teilflächen 8b und 8c angeordnet. Vorteilhafterweise ist dabei die Querschnittsbreite B bzw. der Durchmesser der unteren Mündungsöffnung 16 kleiner als der durchschnittliche Abstand A der menschlichen Sitzbeinhöcker. Da dieser durchschnittliche Abstand A etwa im Bereich um 100 mm liegt, beträgt die Querschnittsbreite B bevorzugt etwa 80 mm. Hierdurch wird erreicht, daß direkt senkrecht unterhalb der Sitzbeinhöcker das Material des Kernteils 4 mit seiner gesamten Höhe angeordnet ist, wodurch eine gute Stützwirkung erreicht wird. Durch die besondere, sich aus Fig. 4 ergebende Ausgestaltung des Hauptkanals 14 wird das Kernteil 4 in diesem Sitzbereich nur um etwa 8 % weicher (als ohne Kanal), was aber durchaus durch die Schaumqualität und/oder durch die Auflage 10 kompensiert werden kann.

Bei der Ausgestaltung als Klimasitz ist es zudem vorteilhaft, wenn gemäß Fig. 2 die auf der Oberseite gebildeten, kanalartigen Vertiefungen 6 zur Strömungsoptimierung mit verrundetem Verlauf ausgeführt sind.

In Fig. 5 sind schließlich noch vorteilhafte Weiterbildungen veranschaulicht. So kann eine Sitzflächenheizung vorgesehen sein, insbesondere in Form eines das Kernteil 4 überdeckenden und luftdurchlässigen Flächenheizelementes 20. Dabei kann es sich um eine sogenannte Carbonschichtheizung handeln, die vorzugsweise zwischen einer zusätzlich auf der Auflage 10 angeordneten Lochschaumschicht 22 und dem Überzug 12 angeordnet ist. Das Kernteil 4 wird von einer formstabilen unteren Sitzschale 24 getragen, die zweckmäßigerweise gleichzeitig auch den Lüfter 18 mechanisch hält.

## Patentansprüche

1. Sitzpolster (1), insbesondere für Fahrzeugsitze, mit einem Kernteil (4) aus einem Kunststoffschaum, wobei das Kernteil (4) auf seiner oberen, einer Sitzfläche (2) zugekehrten Seite eine durch kanalartige Vertiefungen (6) unterbrochene Oberfläche aufweist, sowie die Vertiefungen (6) und dadurch gebildete verbleibende Teilflächen (8) des Kernteils (4) geometrisch in Anpassung an die menschliche Anatomie im Sitz - Anlagenbereich derart ausgelegt sind, dass eine optimale Sitzdruck - Verteilung erreicht wird, **dadurch gekennzeichnet, dass**
zwei jeweils vollständig von kanalartigen Vertiefungen (6) umschlossene Teilflächen (8b, 8c) als Stützelemente zur Abstützung der menschlichen Sitzbeinhöcker sowie Kanalabschnitte (6a) vorgesehen sind, die ausgehend von den Vertiefungen (6) in Richtung eines Sitzrandes des Sitzpolsters (1) verlaufen.

2. Sitzpolster nach Anspruch 1, **dadurch gekennzeichnet, dass** die kanalartigen Vetiefungen (6) zumindest teilweise mit Einlagen ausgefüllt sind, wobei die Einlagen vorzugsweise aus einem im Vergleich zu dem Kernteil (4) härteren Material bestehen.

3. Sitzpolster nach einem der Ansprüche 1 und 2, **dadurch gekennzeichnet, dass** die kanalartigen Vertiefungen (6) zumindest teilweise eine Luftzirkulation ermöglichen.

4. Sitzpolster nach einem der Ansprüche 1 bis 3, **dadurch gekennzeichnet, dass** das Kernteil (4) zumindest in einem die Vertiefungen (6) überdeckenden Bereich mit einer Auflage (10) abgedeckt ist, wobei die Auflage (10) vorzugsweise aus einem groben, luftdurchlässigen Faser-Bindemittel-Material besteht.

5. Sitzpolster nach einem der Ansprüche 1 bis 4, **dadurch gekennzeichnet, dass** sich ein Hauptkanal (14) ausgehend von der der Sitzfläche (2) gegenüberliegenden Unterseite durch das Kernteil (4) erstreckt und in die kanalartigen Vertiefungen (6) übergeht, wobei im Bereich einer unteren Mündungsöffnung (16) des Hauptkanals (14) ein Lüfter (18) anordbar ist.

6. Sitzpolster nach Anspruch 5, **dadurch gekennzeichnet, dass** der Hauptkanal (14) im Bereich seiner unteren Mündungsöffnung (16) einen an einen Strömungsquerschnitt des Lüfters (18) angepassten, insbesondere kreisförmigen Kanalquerschnitt aufweist, der stetig und mit vorzugsweise etwa gleichbleibender Gesamtquerschnittsflächengröße über einen länglichen, schlitzartigen Querschnitt in die Vertiefungen (6) übergeht.

7. Sitzpolster nach Anspruch 5 oder 6, **dadurch gekennzeichnet, dass** die untere Mündungsöffnung (16) des Hauptkanals (14) etwa im Bereich unterhalb der als Stützelemente für die menschlichen Sitzbeinhöcker vorgesehenen Teilflächen (8b, 8c) angeordnet ist, wobei die Querschnittsbreite (B) der unteren Mündungsöffnung (16) kleiner als der Abstand (A) der menschlichen Sitzbeinhöcker ist.

8. Sitzpolster nach einem der Ansprüche 1 bis 7, **dadurch gekennzeichnet, dass** auf dem Kernteil (4) eine Auflage (10) aus einem luftdurchlässigen Material angeordnet ist.

9. Sitzpolster nach einem der Ansprüche 1 bis 8, **gekennzeichnet durch** eine Sitzflächenheizung, insbesondere in Form eines das Kernteil (4) überdeckenden, vorzugsweise luftdurchlässigen Flächenheizelementes.

## Claims

1. Seat cushion (1), in particular for vehicle seats, having a core part (4) of foamed plastic, the upper side of the core part (4) that faces a seat surface (2) having a surface area which is interrupted by channel-like depressions (6), and the depressions (6) and resultantly formed, remaining sub-surfaces (8) of the core part (4) being configured geometrically to match the human anatomy in the seat bearing region in such a manner that an optimum distribution of seat pressure is achieved, **characterized in that** two sub-surfaces (8b, 8c) which are in each case completely surrounded by channel-like depressions (6) are provided as supporting elements for supporting the human ischium bumps and channel sections (6a) are provided which run from the depressions (6) towards a seat edge of the seat cushion (1).

2. Seat cushion according to Claim 1, **characterized in that** the channel-like depressions (6) are at least partially filled with inserts, the inserts preferably consisting of a material which is harder than the core part (4).

3. Seat cushion according to either of Claims 1 and 2, **characterized in that** the channel-like depressions (6) at least partially permit air to be circulated.

4. Seat cushion according to one of Claims 1 to 3, **characterized in that** the core part (4) is covered with a pad (10) at least in a region covering the depressions (6), the pad (10) preferably consisting of a coarse, air-permeable fibre/binding agent material.

5. Seat cushion according to one of Claims 1 to 4, **characterized in that** a main channel (14) extends from the lower side lying opposite the seat surface (2) through the core part (4) and merges into the channel-like depressions (6), it being possible to arrange a fan (18) in the region of a lower mouth opening (16) of the main channel (14).

6. Seat cushion according to Claim 5, **characterized in that** the main channel (14) has, in the region of its lower mouth opening (16), a channel cross section which is matched to a flow cross section of the fan (18), in particular is circular and merges continuously and with a preferably approximately constant overall cross-sectional surface size via an elongate, slot-like cross section into the depressions (6).

7. Seat cushion according to Claim 5 or 6, **characterized in that** the lower mouth opening (16) of the main channel (14) is arranged approximately in the region below the sub-surfaces (8b, 8c) provided as supporting elements for the human ischium bumps, the cross-sectional width (B) of the lower mouth opening (16) being smaller than the distance (A) between the human ischium bumps.

8. Seat cushion according to one of Claims 1 to 7, **characterized in that** a pad (10) of air-permeable material is arranged on the core part (4).

9. Seat cushion according to one of Claims 1 to 8, **characterized by** a seat-surface heating system, in particular in the form of a preferably air-permeable surface heating element which covers the core part (4).

## Revendications

1. Rembourrage de siège (1), en particulier destiné aux sièges d'automobiles, avec une pièce centrale (4) constituée d'une mousse de matière plastique, la pièce centrale (4) présentant sur son côté supérieur tourné vers une surface de siège (2) une surface interrompue par des creux (6) analogues à des canaux, les creux (6) et les surfaces partielles (8) restantes ainsi formées de la pièce centrale (4) étant ainsi configurés de façon géométrique afin de s'adapter à l'anatomie humaine dans la zone d'appui du siège, de telle sorte à obtenir une répartition optimale de la pression de siège,
**caractérisé en ce que**,
deux surfaces partielles (8b, 8c) entourées complètement respectivement par des creux (6) analogues à des canaux sont prévues en tant qu'éléments de soutien pour soutenir les ischions humains, ainsi que des sections de canal (6a) qui se prolongent en partant des creux (6) dans la direction d'un bord de siège du rembourrage de siège (1).

2. Rembourrage de siège selon la revendication 1, **caractérisé en ce que** les creux (6) analogues à des canaux sont remplis au moins partiellement par des garnitures, les garnitures étant constituées de préférence d'une matière plus dure par rapport à celle de la pièce centrale (4).

3. Rembourrage de siège selon l'une quelconque des revendications 1 et 2, **caractérisé en ce que** les creux (6) analogues à des canaux permettent au moins partiellement une circulation d'air.

4. Rembourrage de siège selon l'une quelconque des revendications 1 à 3, **caractérisé en ce que** la pièce centrale (4) est recouverte au moins dans une zone recouvrant les creux (6) par une couche (10), la couche (10) étant constituée de préférence d'une matière grossière à base de liant et de fibres, perméable à l'air.

5. Rembourrage de siège selon l'une quelconque des revendications 1 à 4, **caractérisé en ce qu'**un canal principal (14) s'étend en partant du dessous opposé à la surface de siège (2) à travers la pièce centrale (4) et se transforme en creux (6) analogues à des canaux, un ventilateur (18) pouvant être disposé dans la zone d'une ouverture d'orifice (16) inférieure du canal principal (14).

6. Rembourrage de siège selon la revendication 5, **caractérisé en ce que** le canal principal (14) présente dans la zone de son ouverture d'orifice (16) inférieure une section transversale de canal adaptée à une section d'écoulement du ventilateur (18), en particulier de forme circulaire, qui se transforme en creux (6), de façon continue et avec de préférence une taille de surface de section totale approximativement constante, sur une section transversale longitudinale analogue à une fente.

7. Rembourrage de siège selon la revendication 5 ou 6, **caractérisé en ce que** l'orifice d'ouverture (16) inférieure du canal principal (14) est disposé approximativement dans la zone sous les surfaces partielles (8b, 8c) prévues en tant qu'éléments de soutien pour les ischions humains, la largeur de section transversale (B) de l'ouverture d'orifice (16) inférieure, étant inférieure à la distance (A) des ischions humains.

8. Rembourrage de siège selon l'une quelconque des revendications 1 à 7, **caractérisé en ce qu'**une couche (10) constituée d'une matière perméable à l'air, est disposée sur la pièce centrale (4).

9. Rembourrage de siège selon l'une quelconque des revendications 1 à 8, **caractérisé par** un chauffage de surface de siège, en particulier sous la forme d'un élément chauffant de surface, de préférence perméable à l'air, recouvrant la pièce centrale (4) .
